# EUROPEAN PATENT APPLICATION

(11) **EP 0 821 368 A2**
(43) Date of publication of application: **28.01.1998**
(21) Application number: 97305437.2
(22) Date of filing: 21.07.1997
(51) Int. Cl.: H01B 1/12, H01M 6/18

(54) **Electrolyte and electrolytic cell**

(30) Priority: 23.07.1996 US 22543
(71) Applicant: ROHM AND HAAS COMPANY, Philadelphia, Pennsylvania 19106-2399 (US)
(72) Inventor: La Fleur, Edward Ewart, Warminster, Pennsylvania 18974 (US)
(74) Representative: Tanner, James Percival

(57) **Abstract**

An oligomeric composition with units capable of complexation with conductive metal salts, preferably lithium salts, and with terminal units which do not complex with conductive metal salts or with electrode components, the oligomer preferably combined with a soluble conductive metal salt, preferably a lithium salt, yields a conducting polymer system useful in electrolytic cells, such as rechargeable lithium batteries, without the need for volatile polar solvents. Combination of the oligomer with an acrylic polymer blend provides a supported electrolyte. The conductive metal salt, such as LiN(CF₃SO₂)₂), may be incorporated during the oligomerization reaction.

## Description

The present invention relates to an electrolyte having ionic conductivity which can be used for electrolytic cells, especially rechargeable batteries (also referred to in the literature as secondary batteries), electrochromic displays, and sensors, to electrolyte precursor oligomers, and to combination of such electrolyte oligomers having ionic conductivity with appropriate supporting matrices. It further relates to processes for preparing certain of the electrolytes and articles therefrom.

Several disadvantages are known to electrolytic cells which comprise, as electrolyte, a solution of a conductive salt in a polar solvent. (In the present specification and claims, "conductivity" relates to "ionic conductivity", not "electronic conductivity"). Cells which contain liquids of rather low viscosity may be subject to leakage. Cells which contain volatile liquids have potential problems with loss of solvent as vapor. Liquid electrolytes of this type may also be subject to instability upon over-charging.

In contrast, an electrolytic cell containing a non-volatile, somewhat viscous electrolyte, or with a solid electrolyte is desirable in the construction of electrolytic cells, rechargeable batteries, electrolytic capacitors, and the like, as fabrication ease is enhanced, and unusual shapes and sizes may be prepared with relative ease, while avoiding the above-mentioned problems with liquid electrolytes. For best results, the electrolyte, possibly in combination with a support matrix, should exhibit good mechanical properties, such as light weight with retention of structure over a range of temperatures. Another desirable property is ease of fabrication, such as by molding, extrusion, or thermoforming.

Many attempts have been reported to prepare electrolytes free from solvents, which electrolytes would maintain attractive conductive properties at room temperature, along with the other desirable features enumerated herein, but no system has proved completely satisfactory. One problem is that to compete with liquid electrolytes, the conductivity of the solid electrolyte must be high enough to provide useful electrolytic cells.

It is known to the art that polymers of ethylene oxide (PEO) have attractive properties as substrates for ionic conductors, but require plasticizers or solvents such as propylene carbonate or ethylene carbonate to function adequately. Several references occur to such polymers with one or both ends capped with a free-radical polymerizable functionality, such as a (meth)acryloyl group; these polymers may be then polymerized into a solidified form, usually with crosslinking or formation of a three-dimensional network.

Bauer et al., U. S. Patent 4,654,279, discloses a two phase interpenetrating network of a mechanically supportive phase which is a crosslinked network and a ionic conducting phase which is a liquid 1,2-poly(alkylene oxide) complexed with a suitable metal salt. Although yielding self-supportive films, the polymers of '279 will be prone to the known degradation of the metal ion/poly(alkylene oxide) combination on recycling and exposure to over-voltage. Further, the poly(alkyiene oxide) will be water-sensitive. Further, the combination is not capable of extruding or molding into thermoplastic objects, but requires thermosetting conditions which immobilize the network towards further thermal processing.

Selvaraj et al., J. Electrochem Soc., 142, 366 (February 1995) teaches a poly(meth)acrylate with short etheroxy side chains (ca. five units of ethylene oxide per chain) as suitable, when complexed with an appropriate lithium salt, as a conductive, non-crosslinked, water-insoluble polymer where no plasticizing solvent is present. However, their polymer is described as having a glass temperature (T_{g}) of -26.5 and a molecular weight of 240,000. Ionic mobility within a matrix having so relatively high a glass temperature will be insufficient for obtaining the high conductivity desired below room temperature.

Noda et al., U. S. Patent 5,527,639, discloses a lithium salt-doped polymer obtained by crosslinking an organic compound of the general formula (using his notation)

Z- [(A)ₘ-(Eₚ)-Y] ₖ

where Z is the residue of an active hydrogen compound selected from certain alcohols, amines, and phenols, A is 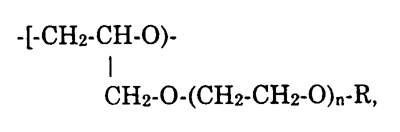 where n is an integer of 0 to 25 and R is C₁-C₂₀ alkyl, alkenyl, aryl, or alkaryl; E is at least one of -(R₂-O)-, R₂ being an alkylene having two or more carbon atoms, Y is an active hydrogen or a polymerizable functional group, k is an integer of 1 to 12, m is an integer of 1 to 250; and p is an integer of 1 to 450. Noda prefers a molecular weight of the organic compound below 50,000. Noda teaches his crosslinked polymer to be useful as a component of an electrode or the electrolyte of a galvanic cell. Noda discloses good storage capability for such galvanic cells, but does not disclose in more than qualitative language the extent of improvement in low temperature conductivity for the complexed lithium ion. Noda requires his organic compound be crosslinked, which is not required for the oligomers of the present invention. Noda's organic compound further differs in structure from the oligomers claimed in the present invention.

M. Watanabe, Makrom. Symp. 105, 229 (1996) has disclosed with no experimental details a macromonomer

CH₂=CH-COO-CH₂-CHR₄-(O-CH₂-CH₂-)_{w}-O-C₂H₅

where R₄ is

-CH₂-O-CH₂-CH₂-O-CH₂-CH₂-O-CH₃,

which is reported to dissolve lithium trifluoromethanesulfonimide and then be polymerized photochemically to conductive films. At Li/O ratios of 0.02-0.08, the conductivity at 80°C, was 10⁻³ Ω⁻¹cm⁻¹ at 30°C, was 10⁻⁴ Ω⁻¹cm⁻¹, and at 0° C. was 10⁻⁵Ω⁻¹cm⁻¹. These polymers do not appear to be oligomeric in nature, and therefore should be less versatile than the combinations of the present invention.

I have discovered a novel oligomer useful in such lithium (or other conductive metal salt-based) batteries, to which oligomer lithium or other conductive metal salt may be added at the time of formation or blended later for improved conductivity and for improved resistance to degradation of conductivity upon recycling or exposure to overvoltage. I have further discovered a combination of lithium (or other conductive metal) salt/oligomer with a matrix polymer blend composition, which matrix is a compatible or miscible blend of two acrylic polymers, at least one of which may also contain a salt which aids in conductivity.

The term "conductive metal salt" in this specification refers to a component of a blend of an oligomer as described herein and a salt (or a mixture of salts) which is soluble in or miscible with the oligomer to form a conducting blend. As Gray, "Solid Polymer Electrolytes", VCH Publishers, 1991, describes at page 116, "polymer electrolytes form when the salt consists of a polarizing cation and a large anion of delocalized charge to minimize the lattice energy." Highly preferred as cations are the lithium salts described herein, but other cations may be employed, as long as the salt meets the solubility criteria and the oligomer/metal salt blend is stable with respect to oxidation and/or reduction at the working potential.

Other cations may be those of the alkali metals, such as sodium, potassium, and the like; exemplifications of such salts are sodium tetraphenylboride, sodium iodide, sodium thiocyanate, potassium thiocyanate, rubidium iodide, and the like. Other cations may also be employed such as alkaline earth cations, such as magnesium, calcium, and the like (as exemplified by calcium iodide, calcium bromide, magnesium perchlorate, magnesium trifluoromethylsulfonate, and the like); aluminum (as exemplified by lithium aluminum tetrachloride); and zinc (as exemplified by zinc bromide, zinc iodide, zinc chloride, and the like). This list is not inclusive; other soluble metal salts may also be useful, e.g., manganous bromide, lanthanum perchlorate, cupric trifluoromethylsulfonate, and the like.

Certain organic cations may also be employed as "metal cations" for the purposes of this invention, such as tetralkylammonium salts, as exemplified by tetraethylammonium tetrafluoroboride, tetrapropylammonium hexafluorophosphide, tetrabutylammonium perchlorate, tetramethylammonium trifluoromethylsulfonate, tetramethylammonium bromide, tetraethylammonium phthalate, and the like.

In the following description and explanation, the term "conductive lithium salt" refers to a highly ionizable salt of lithium with a large counterion which is highly soluble in polar media. This description would exclude , e.g., LiF, LiCl, and Li₂SO₄, but include, e.g., LiClO₄, LiBF₄, and LiN(CF₃SO₂)₂.

The conductive metal salt/oligomer blend may be admixed with the matrix composition to give a compatible blend, or may be encapsulated or combined between layers of the matrix composition or preferably may be applied to the surface of a thin film of matrix composition. Preferably the salt in both salt/oligomer A and matrix B is a lithium salt with a large anion, most preferably (because of solubility) LiN(CF₃SO₂)₂.

These compositions are useful in electrolytic cells, such as batteries with appropriate lithium-based anodes and cathodes. Other known anodes and cathodes may also be utilized, if their electrochemistry is compatible with the conductive metal salt chosen for use in the electrolyte. I further have discovered a means for producing certain salt/oligomer combinations, and also a method for preparing an article from the oligomer as applied to a thin film or sheet of the matrix composition, the article being employed as the electrolyte component of an electrolytic cell, such as an rechargeable battery.

More specifically, I have discovered an oligomer, preferably non-crystalline, of the formula

R₁-X-[(A)q-(Bᵣ)]-Z,

wherein
(a) R₁ is C₁-C₁₂ alkyl, C₁-C₁₂ alkoxyalkyl, C₆-C₇ aryl or alkaryl, or (CH₂)ₘ-COOR₃, where m is 1 or 2, and R₃ is C₁-C₁₂ alkyl;
(b) -X- is -O-, -S-, -S(O)-, -S(O)₂-, -, -NH-, -NR₃-, -NH-C(O)- NH-, -NR₃-C(O)-NR₃-, -NH-C(O)-O-, -NR₃-C(O)- O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O)R₃)₂, -PH-, -PR₃-, -P(OH)-O-, -P(O R₃)-O-, -P(O) (OH)-O-, -P(O) (OR₃)-O-, -O-P(OH)-O-, -O-P(OR₃)-O-, -O-P(O) (OH)-O-, or -O-P(O) (O R₃)-O-;
(c) (A)_{q} comprises polymerized units of a monomer with functionality which is capable of complexing with conductive metal salts, preferably conductive lithium salts;
(d) (B)ᵣ comprises polymerized units of a monomer, whose polymerized units are not capable of complexing with conductive metal salts, i.e., which polymerized units are not capable of complexing with conductive metal salts;
(e) Z is H or R₁-X-;
(f) -[(A)_{q}-(B)ᵣ]-, when r is not 0, define either a block co-oligomer or a random co-oligomer;
(g) (q + r) = 1 to 25, q is 1 to 25, and r is 0 to 24.

I further have discovered a conductive metal salt/ oligomer blend, preferably non-crystalline, of:
(a) from 80 to 95 weight percent of an oligomer of the formula

   R₁-X-[(A)q-(Bᵣ)]-Z,

   wherein
   (1) R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
   (2) is -O-, -S-, -S(O)-, -S(O)₂-, -, -NH-, -NR₃-, -NH-C(O)-NH-, NR₃-C(O)- NR₃-, -NH-C(O)-O-, -NR₃-C(O)-O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O)R₃)₂, -PH-, -PR₃-, -P(OH)-O-, -P(O R₃)-O-, -P(O) (OH)-O-, -P(O) (O R₃)-O-, -O-P(OH)-O-, -O-P(O R₃)-O-, -O-P(O) (OH)-O-, or -O-P(O) (OR₃)-O-;
   (3) (A)_{q} comprises polymerized units of a monomer with functionality which is capable of complexing with conductive metal salts, preferably conductive lithium salts;
   (4) (B)ᵣ comprises polymerized units of a monomer, whose polymerized units are not capable of complexing with conductive metal salts;
   (5) -[(A)_{q}-(B)ᵣ]-, when r is not 0, define either a block co-oligomer or a random co-oligomer;
   (6) Z is H or R₁-X-;
   (7) (q + r) = 1 to 25, q is 1 to 25, and r is 0 to 24.
   and
(b) from 5 to 20 weight percent of one or more conductive metal salts, preferably a conductive lithium salt.

A preferred composition of the oligomer is an oligomer of degree of polymerization of the constituent (meth)acrylate monomers from 1 to 25 comprising:
(a) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
(b) from 0 to 95 weight percent of polymerized units of at least one acrylate ester monomer of the formula

   CH₂=CH-COO-CH₂-CHR-R₂,

   where R is H or CH₃, and where R₂ is H, C₁-C₂₀ alkyl, or C₆-C₂₀ aryl, alkaryl, or aralkyl;
(c) from 0 to 95 weight percent of polymerized units of at least one (meth)acrylate ester monomer of the formula

   CH₂=CR-COO-(CH₂-CHR-O)ₙ-R₂,

   where n is 1 to 12.

A preferred conductive salt/oligomer blend composition, that is, a blend of a conductive salt with an oligomer which blend is also conductive, is a blend of:
(a) from 80 to 95 weight percent of an oligomer of degree of polymerization of the constituent (meth)acrylate monomers from 1 to 25 comprising:
   (1) from 5 to 50 weight percent of end-group units of at least one mercaptan residue R₁-S-, where R₁ is C₁-C₁₂ alkyl, C₁-C₁₂ alkoxyalkyl ,C₆-C₇ aryl or alkaryl, or -(CH₂)ₘ-COOR₃, where m is 1 or 2, and R₃ is C₁-C₁₂ alkyl;
   (2) from 0 to 95 weight percent of polymerized units of at least one acrylate ester monomer of the formula

      CH₂=CH-COO-CH₂-CHR-R₂,

      where R is H or CH₃, and where R₂ is H, C₁-C₂₀ alkyl, or C₆-C₂₀ aryl, alkaryl, or aralkyl;
   (3) from 0 to 95 weight percent of polymerized units of at least one (meth)acrylate ester monomer of the formula

      CH₂=CR-COO-(CH₂-CHR-O)ₙ-R₂,

      where n is 2 to 12; and
   (b) from 5 to 20 weight percent of one or more conductive metal salts, preferably a conductive lithium salt.

For the purposes of defining the present invention, the term oligomer refers to a low molecular weight polymer, preferably non-crystalline, of degree of polymerization below 25 and further containing at least one chain-ending group which is not hydrogen, but an alkyl, alkoxyalkyl, aryl, or alkaryl group or an alkyl group further bearing an alkyl ester group, which the alkyl group is from 1 to 12 carbon atoms, preferably from 4 to 8 carbon atoms. A degree of polymerization of poly(ethyl acrylate) of 25 is a molecular weight of 2500; a degree of polymerization of poly(2-ethoxyethoxyethyl acrylate) of 25 is a molecular weight of 4700; a degree of polymerization of poly(methyl(polyethylene glycol (350) methacrylate) of 25 is a molecular weight of 11,350.

For further definition, a polymerized unit of a monomer may be an internal group or an end group of the oligomer or polymer. Thus a polymerized unit of ethylene oxide may be a -CH₂-CH₂-O- unit or a -CH₂-CH₂-O-Z unit, and a polymerized unit of CH₂=CR-COO-CH₂-CH₃ may be a -CH₂-C(-)R-COO-CH₂-CH₃ unit or a -CH₂-CRZ-COO-CH₂-CH₃ unit, where Z is H or R₁-X-.

The formula -[(A)_{q}-(B)ᵣ]-, when r is not 0, defines either a block co-oligomer, that is where there is a series of -A-A-A- units connected to a series of B-B-B- units, or a random co-oligomer, where units of -A- and -B- are interspersed in a random order. This use of "random" also includes those instances where the structure is not a block co-oligomer but where the distribution of the units is ordered by, e.g., reactivity ratios so as to approach alternation.

All percentages are by weight unless otherwise noted. A (meth)acrylate ester is an ester of either acrylic acid or methacrylic acid.

In the above conductive salt/oligomer blends, it is preferred to select the lithium salt, where such is used as the conductive metal salt, from the group consisting of LiClO₄, LiPF₆, LiBF₄, LiC(CF₃SO₂)₃, Li(CF₃SO₃), and LiN(CF₃SO₂)₂, and most preferably lithium trifluoromethanesulfonimide (LiN(CF₃SO₂)₂). Other polymer-soluble lithium salts with large counterions may also be employed, such as LiAsF₆, Li[B(C₆H₄O₂)₂], and the like.

Articles, useful as components of batteries, may be prepared comprising the above conductive metal salt/oligomer blends together with a membrane, such as a polyfluorocarbon or crosslinked polyacrylate, which allows sorption and permeation of the conductive salt/oligomer blend. The membrane may have a non-woven structure, with porosity preferably of the order of 0.1 to 25 microns.

I further have discovered a composite of
(a) (1) from 5 to 60 weight percent of the oligomer described above, viz., an oligomer of the formula

   R₁-X-[(A)q-(Bᵣ)]-Z,

   wherein
   (a) R₁ is C₁-C₁₂ alkyl, C₁-C₁₂ alkoxyalkyl , C₆-C₇ aryl or alkaryl, or -(CH₂)ₘ-COOR₃, where m is 1 or 2, and R₃ is C₁- C₁₂ alkyl;
   (b) -X- is -O-, -S-, -S(O)-, -S(O)₂-, -, -NH-, -NR₃-, -NH-C(O)- NH-, -NR₃-C(O)-NR₃-, -NH-C(O)-O-, -NR₃-C(O)- O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O) R₃)₂, -PH-, -PR₃-, -P(OH)-O-, -P(O R₃)-O-, -P(O) (OH)-O-, -P(O) (O R₃)-O-, -O-P(OH)-O-, -O-P(OR₃)-O-, -O-P(O) (OH)-O-, or -O-P(O) (O R₃)-O-;
   (c) (A)_{q} comprises polymerized units of a monomer with functionality which is capable of complexing with conductive metal salts;
   (d) (B)ᵣ comprises polymerized units of a monomer, whose polymerized units are not capable of complexing with conductive metal salts;
   (e) Z is H or R₁-X-;
   (f) -[(A)_{q}-(B)ᵣ]-, when r is not 0, define either a block copolymer or a random copolymer;
   (g) (q + r) = 1 to 25, q is 1 to 25, and r is 0 to 24;
(2) from 5 to 20 weight percent of at least one conductive metal salt, preferably a conductive lithium salt; and
   (b) from 20 to 90 weight percent of a matrix composition comprising
      (1) from 10 to 100 weight percent of a first homopolymer or copolymer having a glass temperature, T_{g}, of below -35°C and a weight-average molecular weight of at least 20,000, of from 0 to 90 weight percent of polymerized units of an alkyl or alkylthioalkyl ester of acrylic or methacrylic acid, and of from 10 to 100 weight percent of polymerized units of a poly(alkyleneoxy)(meth)acrylate comonomer of the formula

         CH₂=CR-COO-(CH₂-CHR-O)ₚ-R₂,

         where p is 1-1000;
      (2) from 10 to 90 weight percent of a second copolymer of weight-average molecular weight at least 30,000, of polymerized units of at least one alkyl ester of acrylic or methacrylic acid, wherein the first homopolymer or copolymer and the second copolymer of the matrix composition are miscible, and wherein the conductive metal salt/oligomer blend is miscible with the matrix composition; and
      (3) from 0 to 5 parts weight percent of a conductive lithium salt dissolved in the first homopolymer or copolymer of the matrix composition. This salt is in addition to the amount (5 to 20 weight percent) of the conductive metal salt in the composite, which may be added in a blending operation, or as a preblend with the oligomer.

One preferred class of composites is a composite of
(a) from 5 to 80 weight percent, of a conductive salt/oligomer blend of:
   (1) from 80 to 95 weight percent of an oligomer of degree of polymerization of the constituent (meth)acrylate monomers from 1 to 25 comprising:
      (i) from 5 to 20 weight percent of end-group units of at least one mercaptan residue R₁-S-, where C₁-C₁₂ alkyl, C₁-C₁₂ alkoxyalkyl , C₆-C₇ aryl or alkaryl, or -(CH₂)ₘ-COOR₃, where m is 1 or 2, and R₃ is C₁- C₁₂ alkyl;
      (ii) from 0 to 95 weight percent of polymerized units of at least one acrylate ester monomer of the formula

         CH₂=CH-COO-CH₂-CHR-R₂,

         where R is H or CH₃, and where R₂ is H, C₁- C₂₀ alkyl, or C₆-C₂₀ aryl, alkaryl, or aralkyl;
      (iii) from 0 to 95 weight percent, of polymerized units of at least one (meth)acrylate ester monomer of the formula

         CH₂=CR-COO-(CH₂-CHR-O)ₙ-R₂,

         where n is 2 to 12; and
   (2) from 5 to 20 weight percent of a conductive metal salt, preferably a conductive lithium salt; and
      (b) from 20 to 95 weight percent of a matrix composition, the matrix composition comprising
         (1) from 10 to 100 weight percent of a first copolymer having a glass temperature, T_{g}, of below -35°C., and a weight-average molecular weight of at least 20,000, of polymerized units of from 0 to 90 weight percent, of an alkyl or alkylthioalkyl ester of acrylic or methacrylic acid, and 10 to 100 weight percent of polymerized units of a poly(alkyleneoxy)(meth)acrylate comonomer of the formula

            CH₂=CR-COO-(CH₂-CHR-O)ₚ- R₂,

            where p is 1-1000;
         (2) from 10 to 90 weight percent of a second copolymer of weight-average molecular weight at least 30,000, of polymerized units of at least one alkyl ester of acrylic or methacrylic acid, wherein the first copolymer and the second copolymer of the matrix composition are miscible, and wherein the conductive salt/oligomer blend is miscible with the matrix composition; and
         (3) from 0 to 5 weight percent of a conductive lithium salt dissolved in the first copolymer of the matrix composition.

The following definitions are used herein: the polymers being compatible means exhibiting physical properties consistent with at least an average of the properties of the two components, and the polymers being miscible means no domains being detected of size above 50 nm. in the blend, and with a single glass transition temperature (T_{g}), preferably measured by differential scanning calorimetry, of the blend. It is preferable that all components of the composite be non-crystalline (treating the oligomer/salt blend as one component) at all use temperatures to avoid loss of mobility of the ionic components and thus a decrease in conductivity.

The composites taught in the preceding paragraphs may have at least one of the first or second polymers of the matrix composition in a cross-linked form, preferably accomplished after thermally processing the mixture. In these composites, the composite may be an admixed blend of the conductive salt/oligomer blend and the matrix composition, relying on the miscibility of the components for the ion transport in the electrolytic process. In another variant, the conductive salt/oligomer blend may be encapsulated within the matrix composition. In another and preferred variant, the conductive salt/oligomer blend may be layered to a film or sheet formed from the matrix composition, which film or sheet may be physically perforated with small holes, preferably of the order of 0.1 - 2 microns diameter (100 - 2000 nm), and with porosity preferably 70 - 80 % of the surface area of the film or sheet, to improve ion transport in the electrolytic process whilst restraining any movement of particulate or other electrode material, such as electrode granules.

I have further discovered a process, preferably continuous, for the preparation of a conductive salt/oligomer blend of:
(a) from 80 to 95 weight percent of an oligomer of degree of polymerization of the constituent (meth)acrylate monomers from 1 to 25 comprising:
   (1) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
   (2) from 0 to 95 weight percent of polymerized units of at least one acrylate ester monomer of the formula

      CH₂=CH-COO-CH₂-CHR -R₂,

      where R is H or CH₃, and where R₂ is H,
      C₁- C₂₀ alkyl, or C₆- C₂₀ aryl, alkaryl, or aralkyl;
   (3) from 0 to 95 weight percent of polymerized units of at least one (meth)acrylate ester monomer of the formula

      CH₂=CR-COO-(CH₂-CHR-O)ₙ- R₂,

      where n is 2 to 12; and
(b) from 5 to 20 weight percent of one or more conductive metal salts, preferably a lithium salt, the process comprising:
   (1) drying the conductive metal salt, preferably a lithium salt, to remove water;
   (2) passing the at least one (meth)acrylate ester monomer of the formula CH₂=CR-COO-(CH₂-CHR-O)ₙ- R₂, where n is 2 to 12, and, optionally but preferably, also the at least one acrylate ester monomer of the formula CH₂=CH-COO-CH₂-CHR -R₂, where R is H or CH₃, and where R₂ is H, C₁- C₂₀ alkyl, or C₆- C₂₀ aryl, alkaryl, or aralkyl, through at least one column of activated alumina or molecular sieves;
   (3) admixing the conductive metal salt, the at least one acrylate ester monomer and the at least one (meth)acrylate ester monomer with an alkyl mercaptan R₁-SH, where R₁ is C₁-C₁₂ alkyl, C₁-C₁₂ alkoxyalkyl, C₆-C₇ aryl or alkaryl, , C₆-C₇ aryl or alkaryl, or -(CH₂)ₘ-COOR₃, where m is 1 or 2, and R₃ is C₁- C₁₂ alkyl;
   (4) subjecting the admixture to a free-radical polymerization process; and
   (5) removing any volatile residues by vacuum devolatilization. Other means of removing residues, such as extraction, absorption, and the like, may be employed, but require additional processing steps.

This process may be conducted as a continuous process for the polymerization and devolatilization reaction.

I further have discovered an electrolytic cell, such as a rechargeable battery, comprising an anode, a cathode and a conductive electrolyte comprising a conductive salt/oligomer blend of:
(a) from 80 to 95 weight percent of an oligomer of the formula R₁-X-[(A)_{q}-(Bᵣ)]-Z, wherein
   (1) R₁ is C₁-C₁₂ alkyl, C₁-C₁₂ alkoxyalkyl, C₆-C₇ aryl or alkaryl, C₆-C₇ aryl or alkaryl, or -(CH₂)ₘ-COOR₃, where m is 1 or 2, and R₃ is C₁- C₁₂ alkyl;
   (2) -X- is -O-, -S-, -S(O)-, -S(O)₂-, -, -NH-, -NR₃-, -NH-C(O)- NH-, -NR₃-C(O)-NR₃-, -NH-C(O)- O-, -NR₃-C(O)-O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O)R₃)₂, -PH-, -PR₃-, -P(OH)-O-, -P(O R₃)-O-, -P(O) (OH)-O-, -P(O)(OR₃)-O-, -O-P(OH)-O-, -O-P(OR₃)-O-, -O-P(O) (OH)-O-, or -O-P(O)(OR₃)-O-;
   (3) (A)_{q} comprises polymerized units of a monomer with functionality which is capable of complexing with one or more conductive metal salts, preferably conductive lithium salts;
   (4) (B)ᵣ comprises polymerized units of a monomer, which polymerized units are not capable of complexing with conductive metal salts;
   (5) Z is H or R₁-X-;
   (6) -[(A)_{q}-(B)ᵣ]-, when r is not 0, define either a block copolymer or a random copolymer;
   (7) (q + r) = 1 to 25, q is 1 to 25, and r is 0 to 24;
   and
(b) from 5 to 20 weight percent of one or more conductive metal salts.

One type of such an electrolytic cell comprises an anode, a cathode and a conductive electrolyte comprising an oligomer of degree of polymerization of the constituent (meth)acrylate monomers from 1 to 25 comprising:
(a) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(b) from 0 to 50 percent by weight of polymerized units of at least one acrylate ester monomer of the formula CH₂=CH-COO-CH₂-CHR -R₂, where R is H or CH₃, and where R₂ is H, C₁- C₂₀ alkyl, or C₆- C₂₀ aryl, alkaryl, or aralkyl;
(c) from 0 to 95 weight percent of polymerized units of at least one (meth)acrylate ester monomer of the formula CH₂=CR-COO-(CH₂-CHR-O)ₙ- R₂, where n is 2 to 12.

I further have discovered an electrolytic cell, with utility, for example, as a rechargeable battery, comprising an anode, a cathode and a conductive electrolyte comprising a composite of (a) from 5 to 15 weight percent of
(a) a conductive salt/ oligomer blend of:
   (1) from 80 to 95 weight percent of an oligomer of degree of polymerization of the constituent (meth)acrylate monomers from 1 to 25 comprising:
      (i) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
      (ii) from 0 to 95 weight percent of polymerized units of at least one acrylate ester monomer of the formula

         CH₂=CH-COO-CH₂-CHR -R₂,

         where R is H or CH₃, and where R₂ is H, C₁- C₂₀ alkyl, or C₆ - C₂₀ aryl, alkaryl, or aralkyl;
      (iii) from 0 to 95 weight percent of polymerized units of at least one (meth)acrylate ester monomer of the formula

         CH₂=CR-COO-(CH₂-CHR-O)ₙ- R₂,

         where n is 2 to 12; and
   (2) from 5 to 20 weight percent of a conductive lithium salt; and
(b) from 20 to 95 weight percent of a matrix composition, the matrix composition comprising
   (1) from 10 to 100 weight percent of a first homopolymer or copolymer having a glass temperature, T_{g}, of below -35°C., and a weight-average molecular weight of at least 20,000, of polymerized units of from 0 to 90 weight percent of an alkyl or alkylthioalkyl ester of acrylic or methacrylic acid, and 10 to 100 weight percent of polymerized units of a poly(alkyleneoxy)(meth)acrylate comonomer of the formula

      CH₂=CR-COO-(CH₂-CHR-O)ₚ-R₂,

      where p is 1-1000;
   (2) from 5 to 80 weight percent of a second copolymer of weight average molecular weight at least 30,000, of polymerized units of at least one alkyl ester of acrylic or methacrylic acid, wherein the first homopolymer or copolymer and the second copolymer of the matrix composition are miscible, and wherein the conductive salt/oligomer blend is miscible with the matrix composition; and
   (3) from 0 to 5 weight percent of a conductive lithium salt dissolved in the first homopolymer or copolymer of the matrix composition.

I further have invented a process for preparing the composite and the electrolytic cell described in the preceding paragraph, comprising
(a) polymerization of the monomers, preferably as free of water and alcohol impurities and of inhibitor as feasible, which form the first matrix homopolymer or copolymer in a constant flow stirred reactor in the presence of an appropriate free-radical initiator to at least 65 % conversion;
(b) transfer of the first matrix homopolymer or copolymer to a stirred reactor, preferably directly without exposure to air or water;
(c) admixture with the monomers which form the second matrix copolymer, again preferably as free of water and alcohol impurities and of inhibitor as feasible, optionally with addition of a photosensitizing initiator and a polyfunctional polymerizable monomer;
(d) polymerization of the monomers which form the second matrix copolymer to at least 65 % conversion, preferably under conditions which do not cause the polyfunctional polymerizable monomer to cause crosslinking;
(e) transfer of the admixture of first and second copolymers to an extruder which may contain devolatilizing means;
(f) extrusion of the admixture in the form of a sheet or film, optionally with crosslinking of the extruded film by irradiation with light, such as ultraviolet light, sufficient to activate the photosensitizing initiator and crosslink the second polymer in the matrix blend;
(g) application of the conductive salt/oligomer blend to at least one surface of the extruded sheet or film, preferably under conditions where there is uniform application of the blend and there is limited exposure to air or water;
(h) after extrusion but prior to, simultaneous with, or following the application of the conductive salt/oligomer, perforating the film with holes of 0.1 to 25 microns, preferably 0.1 to 2 micron, to allow the conductive salt/oligomer controlled access to both sides of the sheet or film;
   (i) conducting the oligomer-coated film between the anode and cathode of a battery article, preferably in an inert, water-free atmosphere.

In my invention is found a novel, thermoprocessable, non-crosslinked oligomeric electrolyte, preferably non-crystalline, which can be thermally reprocessed, which exhibits a combination of rigidity and flexibility which allows it to be used in batteries, especially those which are small or of unusual shape, and the like, with no need for solvents, with improved resistance to water when compared to poly(ethylene oxide), and with the ability to transport ions, especially at room temperature or below, which compares favorably with that of the myriad systems based on poly(ethylene oxide) which do not exhibit the other desirable physical properties of the present blends. The two-component metal-salt containing matrix blend formed from higher molecular-weight polymers absent the oligomeric electrolyte has adequate conductivity for certain uses, as is taught in an application filed by the same inventor concurrently with this application, but the addition of the herein-defined oligomeric electrolyte gives improved conductivity, especially at room temperature or below, without significant loss in the other physical characteristics of the two-component blend.

The following paragraphs are presented as a possible explanation for the effectiveness of the oligomers I have discovered, but remains only as an hypothesis. To achieve the desired properties including low viscosity, high lithium ion transference number, solubility of the lithium salt, stability under recycling conditions, and good conductivity at temperatures of room temperature or below, the oligomer (or conductive polymer) should comprise a "blocky" structure wherein one block contains an aliphatic hydrocarbon portion which is electrically stable but non-conductive, and which acts as an external chain to the lithium-polyalkylene oxide complex which is in a complexed ligand structure. Thus the aliphatic section tends to protect against electrical breakdown at the electrode/conductive polymer interface by forming a monolayer at the interface, and to protect against "poling" of the conductive portion when an electric field is applied. The blocky portion needs to be long enough to present a non-polar, low in dielectric constant, hydrocarbon chain to the electrode interface, yet it must have a sufficient degree of miscibility with the conductive portion of the oligomer molecule to keep the oligomer homogeneous during formation. This first block may be formed, e.g., by use of a large amount of a suitable aliphatic mercaptan or other chain transfer agent in the free-radical polymerization of the monomers which supply the ligand-complexing structure, or by use of an appropriate aliphatic isocyanate to "cap" the end of a poly(1,2-alkylene oxide) or polypivalolactone chain, or by use of an appropriate polymerization initiator in a large enough amount that all oligomeric chains are initiated by a radical or ion which leaves an R₁X- functionality at the oligomeric chain end. The oligomer may be terminated with H, R₁, or R₁X. The first block, since it does not complex with metal ions, is free to internally plasticize the oligomer and lower its glass temperature (important for low temperature mobility), even when the second part of the block structure is complexed with a metal ion.

The second part of the "blocky" structure is the ligand structure formed by complexation of the metal ion with the -(O-CH₂-CH₂)- units (or of other complexing units, such as -CH₂-CH₂-NH- (less desirable because of the possibility of reaction between the active H and Li metal), -CH₂-CH₂-NR₂-, -C(=O)-O-CH₂-CH₂- , -S-(CH₂)₅-, -CH₂--C(C(=O)-O-R₁)-, or =P(alkyl)-N-. The composition is governed by the molecular weight of the polymerized portion of the oligomer, and the length of the complexing side chains, both of which affect viscosity of the oligomer. The side chain length also can affect whether side-chain crystallization will occur. Avoidance of side-chain or main-chain crystallization in the second part of the block copolymer structure is necessary to allow sufficient flexibility of the chain for good conductivity at room temperature or below. Similarly, a glassy block should be avoided to allow maximum mobility of the oligomer/salt complex..

This second part of the blocky structure comprises polymerized units of a monomer with functionality which is capable of complexing with conductive lithium salts. As noted in the preceding paragraph, a number of complexing functionalities exist; these may be incorporated into the monomer as side chains, such as (meth)acrylic esters of polyalkylene oxides, pentamethylenesulfide chains having a site to which a (meth)acryloyl group may be attached, and similar chains to which a carbon-carbon double bond may be attached for subsequent radical or ionic polymerization.

In another mode, such functionality may be incorporated into the oligomer by copolymerization of monomers with complexing groups, such as vinylene carbonate. In another mode, the monomer with functionality may be formed in situ by appropriate ring-opening or other polymerizations. Such examples would be ring-opening of ethylene or propylene oxide with an appropriate R₁-X group. Another example would be the appropriate oligomerization of beta-propiolactone to form

R₁-X-(CH₂-CH₂-C(=O)O-)ₙ

blocks, or appropriate oligomerization of gamma-butyrolactone to form

R₁-X-(CH₂-CH₂-CH₂-C(=O)O-)ₙ

or the oligomerization of ethyl acrylate to form

R₁-X-(CH₂-CH-C(=O) O-CH₂CH₃)ₙ

blocks, and the like.

As the 1,2-ethyleneoxy- link is preferred by those of ordinary skill in the art for complexing with lithium ions, one can envisage other structures useful as the second part of the blocky structure such as 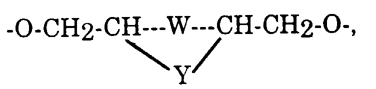 where -W- is -(CH₂)₃- , -(CH₂)₂-, -CH₂-O-CH₂-, and Y is -O- , -S-, -C(=O)- or - NR₁-.

The prior art, such as Gray, discusses the selection of appropriate conductive salts and of poly(ethylene oxides) and certain alternative structures, but not does teach, suggest, or disclose the specific oligomers taught herein.

Within the blocky structure R₁-X-[(A)_{q}-(Bᵣ)]-Z, the B structure can represent polymerized units of such monomers without functionality capable of complexing with conductive lithium salts, such as those monomers illustrated by (a) vinyl monomers such as styrene, an olefin such as isobutylene or ethylene, an alkyl vinyl ether, and the like; (b) addition monomers such as hexamethylene glycol, terephthalic acid, hexamethylene diamine, adipic acid, and the like.

The oligomers of the present invention absent any of the -O-CH₂-CH₂-O- functionality generally deemed necessary for complexation with conductive metal salts, but carrying acrylic ester functionality, can surprisingly form conductive admixtures. It is preferred, however, to have at least some of an appropriate known complexing -O-CH₂-CH₂-O- functionality, in combination with a lithium or other metal salt known to be effective in forming conductive materials, such as one both highly soluble and with an anion of high bulkiness, such as LiN(CF₃SO₂)₂, otherwise known as lithium bis(trifluoromethanesulfonyl)imide.

The oligomers of the present invention absent additional lithium salt added in their preparation or by post-blending can still be effective when employed with an appropriate lithium-based cathodic/anodic system, as the oligomers can complex with lithium ions from the cathode and/or anode to convey ionic charge between the electrodes. In this condition, the electrodes are partially dissolved by solution and complexation into the oligomer electrolyte, and the system will not be as effective as the pre-formed lithium salt/oligomer complex until the concentration of complexed lithium reaches ca. 5 parts by weight to 95 parts of the oligomer.

The lithium or other salt may be blended with the oligomer by any conventional means, such as by melt blending, dissolution of the salt in an appropriate non-aqueous volatile solvent and evaporating, and the like. However, it is easier to prepare the well-mixed blend by adding the salt to the monomers and other reactants prior to the oligomerization reaction, optionally with drying of the mixture prior to polymerization.

The preferred oligomer electrolytes described in this invention may be prepared by a process of in-situ bulk free-radical polymerization of a mixture of appropriate chain-transfer agent, such as an alkyl mercaptan or a mercaptoester, an alkoxyalkyl compound with a transferable alpha-hydrogen, a disulfide, and the like, with at least one vinyl monomer, such as an acrylate or methacrylate ester which contains groups which complex with the lithium or other metal salt. Suitable examples are 2(2-ethoxyethoxy) ethyl acrylate (M#2 in the Examples) and monomethoxy poly(ethylene glycol (Mw = 350) monomethacrylate) (MMPEG(350)MMA) (M#3 in the Examples) monomers, and the like, which may be copolymerized with an alkyl acrylate, such as ethyl acrylate and the like. However, other suitably adapted polymerization methods such as solution and suspension polymerization techniques may also serve to prepare the oligomer electrolytes. A continuous feed stirred tank reactor (CFSTR) is an advantageous process for preparing such oligomers.

The poly(alkyleneoxy)(meth)acrylate comonomer of the first homopolymer or copolymer, which complexes with lithium and other metal salts as well as aiding in reducing the glass temperature of the polymer, is of the general formula:

CH₂ = CR - CO₂ - (-CH₂CHR₁O)ₙ - R₂

It is preferred that R₂ be either H or CH₃ when n is an integer between 3 and 50. When n is less than 3, R₂ should preferably be C₃-C₂₀ alkyl, C₆-C₂₀ aryl or C₇-C₃₀ alkylaryl group. The methacrylate esters, i.e. R = CH₃, are preferred because of their photochemical stability.

The alkyl or alkylthioalkyl ester of acrylic or methacrylic acid component of the first homopolymer or copolymer may be such as methyl acrylate, ethyl acrylate, propyl acrylate, isopropyl acrylate, n-butyl acrylate, sec-butyl acrylate isobutyl acrylate, t-butyl acrylate, hexyl acrylate, heptyl acrylate, 2-heptyl acrylate, 2-ethylbutyl acrylate, dodecyl acrylate, n-hexyl methacrylate, n-octyl methacrylate, 2-ethylhexyl methacrylate, n-decyl methacrylate, lauryl methacrylate, tetradecyl methacrylate, octadecyl methacrylate, ethylthioethyl methacrylate, ethylthioethyl acrylate, and the like.

The alkyl ester of acrylic or methacrylic acid component of the second polymer, where here alkyl also includes cyclic structures, may be such as methyl acrylate, ethyl acrylate, propyl acrylate, isopropyl acrylate, n-butyl acrylate, sec-butyl acrylate, isobutyl acrylate, t-butyl acrylate, hexyl acrylate, heptyl acrylate 2-heptyl acrylate, 2-ethylbutyl acrylate, dodecyl acrylate, n-hexyl methacrylate, n-octyl methacrylate, 2-ethylhexyl methacrylate, n-decyl methacrylate, lauryl methacrylate, tetradecyl methacrylate, octadecyl methacrylate, hexadecyl acrylate, isobornyl acrylate, cyclohexyl acrylate, methyl methacrylate, ethyl methacrylate, n-propyl methacrylate, isopropyl methacrylate, n-butyl methacrylate, sec-butyl methacrylate, isobutyl methacrylate, t-butyl methacrylate, 2-ethylbutyl methacrylate, cyclohexyl methacrylate, isobornyl methacrylate, 3,3,5-trimethylcyclohexyl methacrylate, and the like.

Other co-monomers may be present in either or both of the polymeric components of the composition, as long as the mutual miscibility of the two polymers is maintained. The polymerizing mixture may contain mercaptan or some other chain transfer agent to control the molecular weight, and the second polymer formed may contain a multifunctional monomer at a low level to lower creep in the formed blend.

A preferred matrix composition comprises of the following molecularly miscible copolymers:
(a) From 5 to 95 weight percent of a first copolymer wherein the first copolymer comprises mainly of 10 weight percent of monomethoxy poly(ethylene glycol (Mw=400) monomethacrylate) (MMPEG(400)MM) and 90 weight percent of ethyl acrylate;
(b) From 95 to 5 weight percent of a second copolymer wherein the second copolymer comprises mainly of 40 weight percent of ethyl acrylate and 60 weight percent of methyl methacrylate.

Certain of the matrix compositions described in this invention were prepared by a process of in-situ bulk or emulsion polymerization of commercially available methyl methacrylate, ethyl acrylate and monomethoxy poly(ethylene glycol (Mw=400) monomethacrylate) monomers. However, other suitably adapted polymerization methods such as solution and suspension polymerization techniques may also serve to make the copolymers. The first stage copolymer can be prepared by the use of a continuous feed stirred tank reactor (CFSTR). Unpolymerized monomers were removed from the two stage copolymer effluent in a stripping agent such as a static mixer equipped with a vacuum pump. The overhead fraction from the stripping column comprising of unpolymerized monomers may be passed to a recovery system or, preferably, recycled to the second stage of the polymerization process. The miscible polymer also may be stripped of monomers by passing through a melt pump equipped with a vacuum port. The residence time in the polymerization reaction vessel (CFSTR), the monomer feed rate, the initiator and chain transfer concentration and the polymerization temperature were arranged in order to ensure monomer conversion ranging from 80 to 90 weight percent.

The weight average molecular weight of the first homopolymer or copolymer of the matrix composition may vary from 20,000 to about 150,000 or above. A preferred molecular weight range is 30,000 to 100,000. The weight average molecular weight of the second copolymer may vary from 30,000 to 500,000 or above. A preferred molecular weight range of 30,000 to 200,000 is adequate to facilitate ease of processing, thermal and rhelogical stability of blend compositions.

In the course of thermal processing, small quantities of additives may be added to the oligomer or to the matrix polymers for the purpose of improving the physical properties of the final article of commerce. Examples of additives may include one or many of the following classes of compounds: antioxidants, ultraviolet light absorbers, non-volatile plasticizers, such as dioctyl sebacate, low molecular weight polyesters, and the like, antistatic agents, slip agents, coloring agents, fillers and other compounds. However, it is preferred to employ as few of these materials as possible to avoid side reactions which can affect the conductivity of the composite or the recyclability of the final battery.

The components of the final battery which are used in conjunction with the electrolytes taught herein are known to the art. Preferably they are based on lithium technology for the anode, wherein one component is a lithium metal film, a lithium alloy, such as lithium/tin, or lithium combined onto an appropriate substrate, such as carbon black. The second cathodic component may be any of many known to the art, such as lithium/cobalt oxide combination, lithium/titanium sulfide, lithium/manganese oxide combinations, such as LiMn₂O₄ or LiMnO₂, LiₓMVO₄, (where x is ca. 5 - 9 and V is Co, Ni, Cd or Zn), vanadium pentoxide, copper oxide, or chromium oxide(s), and the like.

The conductive compositions and blends taught herein may also be useful in electrochromic uses, optical uses where conductivity may be combined, and the like.

The heterogeneous structure taught herein for the oligomer/membrane combination or the use of the oligomer on the membrane surface accomplishes several needed functions. The insoluble polymer film keeps the electrodes from contacting each other, even if they are in granular form. Further, they allow ready diffusion of the oligomer/metal salt blend.

Another advantage of the oligomers of the present invention, either in free form or as a composite with a flexible matrix polymer support, is that they can be used as very thin (such as under 25 microns in thickness), yet robust, layers or films. Such a form improves conductivity, allows for use in non-linear containers, and aids in ensuring good contact between electrolyte and electrode at all surfaces. The oligomers are non-volatile at the operation temperature of the solid state devices, such as batteries. For application and formation of the final electrolyte, the oligomers may be combined with a fugitive solvent for the purpose of spin or roll coating applications. The oligomers can also be blended with a high-melting polar solid such as ethylene carbonate.

The following examples will illustrate the properties of the family of unique copolymers. All compositions referred to in the examples are in weight percent unless otherwise specified.

The mechanical properties of the optically clear two stage copolymer composites were evaluated with the aid of parts that were prepared by compression molding on a Carver press. About 10 grams of resin is placed on a piece of flat glass of dimension: 6" x6" x1/16" ( 152.4 mm. x 154.2 mm. x 1.59 mm.) which is preheated to 66°C. A spacer 12 mils in thickness is placed on the surface of the glass encompassing the resinous matter. Another piece of flat glass of comparable dimension is mounted on the resin to form a sandwich. The glass-polymer-glass composite is then compressed slowly until a maximum load of 800 lbs./sq. in ( 5.512 mPa) is attained. The composite is then held at this pressure and temperature for five minutes. At the end of the five minutes duration the sample is removed from the press, sectioned into 2.5"x1.5"( 63.5 mm. x 38.1 mm.) plaques for analysis by the ASTM falling dart test D3029.

The following abbreviations are used in the tables and examples: MMA = methyl methacrylate; EA = ethyl acrylate; monomethyl ether-poly(ethylene glycol(400))-monomethacrylate = M#1; 2(2-ethoxy ethoxy)-ethyl acrylate =-M#2; monomethyl ether-poly(ethylene glycol(350))-monomethacrylate = M#3; poly(propylene glycol (400))-monomethacrylate = M#4.

### EXAMPLE A: CFSTR Polymerization of Acrylic Oligomers

The following is illustrative of the method for preparing the acrylic oligomers of the present invention. Oligomers comprising 5-10 weight percent of M#3, 95 to 90 weight percent M#2 and a one molar concentration of lithium salt (LiN(CF₃SO₂)₂ were prepared by bulk polymerization technique as follows: A monomer mixture of 59.97% of 2-(2-ethoxy-ethoxy)-ethyl acrylate, 6.66% of MMPEG(350)MMA, 0.05% of 1,1'-azobis(cyclohexanecarbonitrile) initiator, 13.33% of n-butyl mercaptan and 20.00% of LiN(CF₃SO₂)₂ was fed into a glass vessel in which the mixture was purged with an inert gas such as nitrogen. After purging; the monomer-salt mixture was degassed and kept under a nitrogen blanket. The mixture was then pumped at a maximum rate of 15 g/min. through a series of filters into the CFSTR in which the monomers were copolymerized to yield 86-95 weight percent monomer conversion. The residual monomers may be removed by conventional processes, e.g., devolatilization under vacuum, falling film evaporator, or a wiping blade film evaporator.

### EXAMPLES 1-12

In order to circumvent potential problems engendered from the use of solvents in the preparation of polymer or oligomer electrolyte films, the electrolytes listed in Table I were prepared from a mixture of the neat monomers and lithium salts. This technique is superior to the current state of the art in that it has the potential of yielding solvent free, highly desirable, ultra pure polymer electrolytes. Because of the inherent difficulty experienced in removing fugitive solvents from polymer electrolytes, experiments were designed to formulate solvent free polymer electrolytes. Unlike the previously described polymer electrolyte formulations that involved the use of solvents (albeit fugitive) for film preparation, the solvent free acrylic polymer electrolytes were prepared by the following unique process:

The highly ionic conductive salt/oligomeric component of the acrylic polymer electrolyte was synthesized from a mixture of ethyl acrylate, M#2 and M#1 monomers and the ionic lithium salts: LiCF₃SO₃, LiBF₄, LiN(CF₃SO₂)₂, or LiPF₆. A high concentration of chain transfer agent (n-butyl mercaptan) was used in order to restrict the growth of the polymer chain and consequently minimize the molecular weight. The ionic conductivity of the monomer salt mixture was determined (at room temperature (ca. 25°C.), (unless otherwise noted) prior to and after polymerization. This analytical feature allows tailoring the desired final ionic conductivity of the electrolyte by the choice of monomer and lithium salt concentration.

The highly ionic conductive salt/oligomeric electrolyte was combined with a clear acrylic solid polymer electrolyte membrane that was synthesized by in situ bulk polymerization of two acrylic copolymers and a lithium salt of a predetermined concentration. The first copolymer was synthesized from a mixture of EA or M#2 and M#1 monomers and lithium salt. The second copolymer was prepared in situ from a copolymer monomer mixture, that comprises the first copolymer, and MMA and EA monomers. The latter monomers were preferably in the weight ratio of 3:2 respectively. The copolymerization of the monomers MMA and EA in the presence of the first stage copolymer (P(EA- M#1)= 90/10) and lithium salt yielded a clear dimensionally stable rubbery polymeric composite.

**TABLE I:**

| Example # | Polymer | Electrolyte | T_{g}, °C | Stability, volts | MW | Conductivity, Ω⁻¹ cm⁻¹ (monomer) | Conductivity, Ω⁻¹ cm⁻¹ (after polymerization) |
|---|---|---|---|---|---|---|---|
| 1 | EA/M#1=50/50 | LiCF₃SO₃, 0.6 M | -45 | -- | 22,200 | 32 x 10-5 | 0.15 x 10⁻⁵ |
| 2 | EA/M#1=50/50 | LiCF₃SO₃, 0.6 M | -46 | -- | 13,300 | 30 x 10⁻⁵ | 0.24 x 10⁻⁵ |
| 3 | EA/M#1=50/50 | LiCF₃SO₃, 1.2 M | -26 | -- | 13,500 | 47 x 10⁻⁵ | 0.03 x 10⁻⁵ |
| 4 | EA/M#1=50/50 | LiClO4, 1.2 M | -30 | -- | 18,400 | 164 x 10⁻⁵ | 0.05 x 10⁻⁵ |
| 5 | EA/M#1=50/50 mixed 1:1 with MMA/EA =50/50 | LiCF₃SO₃, 1.0 M | ---- | -- | 13,000 | 0.7 x 10⁻⁵ | 2.6 x 10-9 |
| 6 | EA/M#1=50/50 mixed 1:1 with MMA/EA =60/40 | LiCF₃SO₃, 1.1 M | -32 | -- | 19,100 | 650 x 10⁻⁵ | 0.24 x 10⁻⁵ |
| 7 | EA/M#1=50/50 | LiCF₃SO₃, 1.1 M | -44 | -1 to +4.5 | 28,000 | 28 x 10⁻⁵ | 0.23 x 10⁻⁵ |
| 8 | EA/M#1=50/50 | LiCF₃SO₃, 1.5 M | -26 | -- | 74,000 | 18 x 10⁻⁵ | 0.01 x 10⁻⁵ |
| 9 | EA/M#1=50/50 | LiCF₃SO₃, 1.0 M | ---- | -- | 8,000 | 46 x 10⁻⁵ | 0.8 x 10⁻⁵ |
| 10 | EA/M#1=50/50 | LiBF4 1.0 M | --- | -- | 9,000 | 55 x 10⁻⁵ | 1.9 x 10⁻⁵ |
| 11 | EA/M#1=30/70 | LiCF₃SO₃, 1.0 M | --- | -1 to +4.5 | 8,500 | 37 x 10⁻⁵ | 3.1 x 10⁻⁵ |
| 12 | EA/M#1/acrylamide=5/14/1 | LiCF₃SO₃, 1.0 M | --- | -1 to +4.5 | 12,000 | 39 x 10⁻⁵ | 1 x 10⁻⁵ |

The data listed in Table I reveal that:
(a) The ionic conductivity of the monomer salt solution undergoes an order of magnitude change in value with the conversion of monomers to low molecular weight polymer;
(b) For a given copolymer composition and molecular weight, salt concentration in excess of 1 mole per liter results in an increase in T_{g} and a concomitant reduction in ionic conductivity;
(c) The data given in Table I support the hypothesis that the viscosity of the polymer electrolyte is proportional to molecular weight (at least in the molecular weight range reported) and inversely proportional to ionic conductivity;
(d) The data listed in Table I also suggest that neither LiBF₄ nor LiCF₃SO₃ was highly solvated by the acrylic copolymers.

The polymer electrolyte designated Ex. 12, Table I, was prepared for the purpose of probing the effect of incorporating the comonomer acrylamide in the EA/M#1 monomer mixture. Because acrylamide has a relatively higher dielectric constant than both EA and M#1, it was postulated that inclusion of the former monomer should increase the relative permitivity of the monomer mixture, thus promoting the dissolution of the lithium salt. However, a comparison of the electrical properties of composition Ex. 11 with that of Ex. 12, reveals that the ionic conductivity was relatively unaffected by the inclusion of one part of acrylamide monomer in the EA/ M#1 monomer mixture.

The electrochemical stability of three of the electrolyte compositions listed in Table I, Ex. 7, 11, and 12 was determined in the potential range between -1 and 4.5 v (vs. Li⁺/Li) using cyclic voltammetry at a platinum working electrode. A typical experiment consisted of sweeping the cell potential anodically from -1 to 4.5v, followed by a cathodic scan from 4.5 to -1v at a sweep rate of 50 mV/sec. The electrolyte Ex. 7 was cycled repetitively to a maximum of 4,713 cycles. The voltammograms exhibited no evidence of electrolyte oxidation or Li deposition/ dissolution processes. The results suggest that these electrolytes are stable in contact with the Li electrode.

### EXAMPLES 13 - 14

As shown in Table II and discussed previously, the low molecular weight electrolyte was prepared from a mixture of M#2 and or ethyl acrylate and M#3 in the presence of a 0.7 molal concentration of lithium salt (LiN(CF₃SO₂)₂). The copolymer electrolyte designated as Ex. 13 exhibits higher T_{g} and molecular weight than that for the electrolyte Ex. 14. This difference in the thermal and molecular properties is reflected in the ionic conductivity of these electrolytes. (All conductivities throughout are at room temperature unless otherwise noted).

**TABLE II:**

| Oligomer Properties | Oligomer Composition | Salt | MW | T_{g}, °C. | Conductivity, Ω⁻¹ cm⁻¹ |
|---|---|---|---|---|---|
| Example 13 | M#2/EA = 70/30 | LiN(CF₃SO₂)₂, 1M | 1890 | -77 | 1 x 10⁻⁴ |
| Example 14 | M#2/M#3 = 90/10 | LiN(CF₃SO₂)₂, 1M | 1270 | -79 | 1.7 x 10⁻⁴ |

### EXAMPLES 15 - 17

These examples show that the measured T_{g} of the low molecular weight copolymer Ex. 15 that was prepared in the absence of salt is ca. -81.1°C. The T_{g} of the copolymer that was prepared in the presence of 0.7m LiN(CF₃SO₂) lithium salt, Ex. 17, was ca. -80.4°C. When an equimolal (0.7m) amount of salt (LiN(CF₃SO₂)₂) was added to the salt free copolymer, the T_{g} increases from -81.1°C to -67.5°C. This significant change in T_{g}, Table III, is reflected in the lower ionic conductivity of the post salt addition copolymer electrolyte.

**TABLE III:**

| Oligomer/Salt Properties | Composition | Salt | Salt added | MW | Tg, °C. | Conductivity, Ω⁻¹ cm⁻¹ |
|---|---|---|---|---|---|---|
| Example 15 | M#2/M#3 = 90/10 | ---- | ---- | 700 | -81 | 0 |
| Example 16 | M#2/M#3 = 90/10 | LiN(CF₃SO₂)₂, 0.7 M | after polymerization | 700 | -68 | 1.3 x 10⁻⁴ |
| Example 17 | M#2/M#3 = 90/10 | LiN(CF₃SO₂)₂, 0.7 M | before polymerization | 5760 | -80 | 1.7 x 10⁻⁴ |

The absence of change in the T_{g} of the salt complex, which results from in situ polymerization, is an unusual occurrence in binary solid/liquid solutions of polymer and salt. The addition of salt to a polymer almost always increases the T_{g} of the resulting complex. This is manifested in the form of physical crosslinks, which emanates from strong dipolar interactions. The effect is substantially magnified especially in the case of electrolytes that require high salt concentration to improve the density of charge carriers. Whereas the high salt concentration is beneficial to the overall ionic conductivity, the resulting physical crosslinks retards the polymer segmental mobility and hence immobilizes the motion of the ions.

Table IV lists experimental variation of glass transition temperature (T_{g}) with concentration for some of the most widely used salts. A review of the data suggests that both salts, based on the triflyl anion (CF₃SO₂)⁻, produce a smaller increase in T_{g} with salt concentration. The fact that all lithium salts produce a substantial increase in the T_{g} of the final polymer-salt complex, at high salt concentrations suggests that the copolymer electrolytes derived from in situ polymerization of salt plus monomer mixture possess unusual physical properties.

**TABLE IV:**

| Literature Values: Variation of T_{g} with Concentration | LiSCN | LiClO₄ | LiCF₃SO₃ | LiN(CF₃SO₂)₂ |
|---|---|---|---|---|
| dT_{g}/dX, °C/ mol % | 3.8 | 4.2 | 2.8 | 2.8 |

### EXAMPLES 18 - 26

In these examples the solid portion of the electrolyte was synthesized from a EA/M#3 =90/10 mixture, a crosslinker, poly(ethylene glycol(200))-dimethacrylate and a 0.35 molal concentration of the lithium salt, LiN(CF₃SO₂)₂. This system forms solid solutions that range in optical quality from translucent to clear. For a given binary copolymer composite, the formation of clear solid solutions is directly related to the concentration of salt (LiN(CF₃SO₂)₂) that forms the complex. As can be seen in Table V, the 0.35 molal salt complexes, Exs. 24 and 25, are optically clear whereas the 0.18 molal salt complex Ex. 26 was opaque in appearance. The heterogeneous nature of the latter complex was supported by the occurrence of two glass transition temperatures in the DSC thermogram. The lower temperature (-19.4 °C) represents the rubbery phase while the higher temperature (+19.5 °C) represents the glassy phase of the polymer-salt complex.

As discussed previously, the solid portion of the polymer electrolyte does not support fast Li+ ion transport because the rate of relaxation of the copolymer chains, at ambient temperature, was too slow to promote translational motion of the cation along coordination sites. The membrane designated Ex. 24, Table V, yields ionic conductivity of approximately 2.5 x 10⁻⁶ S/cm. When a film sample of Ex. 24 was combined with the liquid electrolyte of Ex. 14 (conductivity ca. 1.76 x 10-4 S/cm), a 27 fold increase in conductivity was obtained (0.7 x 10⁻⁴ S/cm). A similar increase in conductivity also occurs in the case of the membrane Ex. 25 (2.03 x 10⁻⁴ S/cm). Both membranes contain a 0.35 molal concentration of lithium salt, LiN(CF₃SO₂)₂). The salt content of Exs. 24 and 25 differentiates these membranes from those prepared without salt, Table V. As can be seen from the data listed in Table V, the latter membranes are at least an order of magnitude lower in conductivity than the salt rich membranes. Each membrane was exposed to the liquid electrolyte at room temperature for a maximum of 10 minutes. The variation in the percent mass uptake is directly related to the nonuniformity in thickness of the membranes.

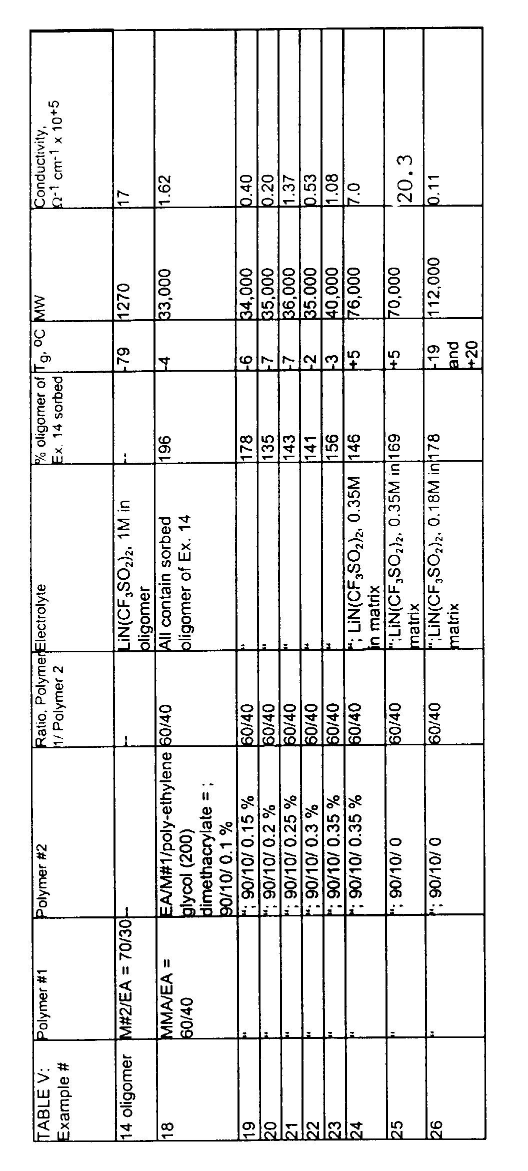

### EXAMPLES 27 - 28

This example demonstrates that impurities in the monomers and mercaptan used to form the oligomer can effect the ultimate properties of the oligomer in its ability to undergo recycling in the cell (lithium ion intercalation-deintercalation). Impurities can passivate the electrode components, such as lithium/graphite or lithiated cobalt oxide composite electrode surfaces, by deposition, or by degradation of the electrodes via leaching or swelling of the binder. Such impurities can include methyl ether of hydroquinone (MEHQ, an inhibitor of premature polymerization), water, acrylic acid, alcohol, heptane, and toluene. The water and MEHQ contents can be reduced by multiple passage of the monomers through columns of molecular sieves and alumina beads. The lithium salt should be thoroughly dried prior to use, such as by drying in a vacuum oven for 100°C, for at least 24 hours.

Cyclic voltammetry (CV) was performed in a glove box under argon. A PAR Model 376 potentiostat/galvanostat controlled with a PAR Model 175 universal programmer was used to perform the CV measurements. The working electrode was a lithium/cobalt oxide/ poly(vinylidene fluoride)/carbon black composite; it was immersed in the oligomer conductive salt electrolyte to yield a geometric surface area of about 1.6 cm². Staircase cyclic voltammograms were conducted; the appearance of the electrodes was also noted. In the cyclic voltammograms, a higher negative value at ca. 3.5 volts indicate lithium cathodic reduction and higher positive values at voltages ca. 4.0 - 4.2 volts indicate lithium anodic oxidation deintercalation. Also, if the area swept out by the waves increases upon repeated scanning between a 1 mV/sec. between 3.0 and 4.3 volts, such is indicative of continuous irreversible reduction of some unknown species at the working electrode.

Tested were three materials: Example 17 (Table V, weight-average molecular weight 5760), Example 27 (repeat of Example 17, but with purified monomers, weight-average molecular weight 1220), and a commercial liquid electrolyte with no polymeric component, Lipaste from Tomiyama Chemical, believed to be 11.7 wt. % LiPF₆ in ethylene carbonate/ propylene carbonate/ diethyl carbonate = 41/24.8/22.5 (Example 28). For Example 27 as compared to Example 17, the MEHQ content in the monomer/salt mixture prior to polymerization was reduced from 393 to below 15 ppm., and the water content reduced from 90 to 80 ppm.

Example 17, although exhibiting attractive properties on initial use, gave indications by the above test that it was not fully acceptable for repeated cell cycling. Further there was evidence of surface corrosion at both the Li metal and the composite electrodes, whereas no evidence was seen on the electrodes immersed in the electrolyte designated Example 27.

The commercial liquid sample (Example 28) gave evidence for the CV measurements of initial large irreversible oxidation and reduction currents, probably by formation of a solid electrolyte interface, which was not optically detected. After repeated scanning, the wave forms for Example 28 were similar to those initially and consistently observed for Example 27.

It is anticipated that the oligomer of Example 27 may be further purified with the aid of a falling film still or wiped vacuum evaporator.

**Table VI**

| CV Testing | Repeated Cycling | Electrode Corrosion | Cell cyclability |
|---|---|---|---|
| Example 17 | Area swept out increased on repeated scanning | observed | Not acceptable |
| Example 27 | Area swept out unchanged on repeated scanning | not observed | Acceptable |
| Li Paste (Example 28) | Area swept out decreased on repeated scanning | not observed; suspected formation of protected solid electrolyte at interface | Acceptable after repeated scanning |

### EXAMPLE 29

In this Example is described the preparation of the two-component matrix in film form as a separator film onto which the conductive salt/oligomer blend was coated.
(1) The first stage copolymer was synthesized from a 9:1 weight ratio of ethyl acrylate (EA) and M#1 monomers respectively. The EA/M#1 copolymer was prepared by the use of a continuous flow stirred tank reactor (CFSTR). A copolymer comprising of 10 weight percent of M#1 and the remainder EA prepared by bulk polymerization technique as follows: The monomer mixture was prepared from the two monomers and other essential ingredients. A typical mixture contains: 87.7% of EA, 9.7% of M#1, 0.07% of 1,1'-azobis(cyclohexanecarbonitrile and 2.44% of n-dodecyl mercaptan. This mixture was fed into a glass vessel in which the mixture was purged with an inert gas such as argon. After purging, the monomer mixture was degassed and kept under an argon blanket. The mixture was then pumped at a maximum rate of 15 g/min. through a series of filters into the CFSTR in which the monomers copolymerized to yield ca. 86 weight percent conversion. The polymerization of the ethyl acrylate and M#1 may be accomplished at temperatures ranging from 105 to 125°C. At this temperature range, the operating pressure and stirring rate was set at 120 psi ( 827 kPa) and 300 RPM respectively. Since the polymerization reaction is highly exothermic, the reactor temperature was controlled with the aid of a cooling jacket. The polymerization was performed in the absence of a solvent.
(2) The second stage copolymer was similarly synthesized from a mixture that contains the following ingredients: 49.9 weight percent of the first stage copolymer, P(EA/M#1) =90/10) plus any residual monomer, 29.9 weight percent of MMA, 19.9 weight percent of EA, 0.03% of 1,1'-azobis(cyclohexanecarbonitrile and 0.25% of n-dodecyl mercaptan. The mixture was similarly purged with argon, degassed and kept under an argon blanket. The degassed mixture was fed through a series of filters at a maximum rate of 15 g/min. into a CFSTR in which the final stage polymerization occurs to yield a molecularly miscible two stage copolymer system. A minimum of 0.5 molal LiN(CF₃SO₂)₂, lithium salt was added to the second stage monomer mixture prior to polymerization. The second stage polymerization was also carried out at temperatures ranging from 120 to 125°C. The stirring rate and pressure the same as that used in the preparation of the first stage pre-polymer. Unpolymerized MMA and EA monomers intimately mixed with the two stage copolymers to form a melt processable gel.
(3) The two stage copolymer gel (95 wt. %) was combined with 5 weight percent poly(ethylene glycol(200))-di(meth)acrylate, 0.05-0.5% of benzoyl peroxide (initiator) and 0.05-0.5% of benzoin (2-ethoxy-2-phenylacetophenone, activator); all percentages based on the total combined weight of residual monomer and crosslinker. The entire mixture was fed into a continuous flow stirred tank mixer (CFSTM) where it was homogenized prior to being fed into a melt pump or extruder. The gel was extruded into a thin (50 microns) film and then irradiated with ultra violet light to form a dimensionally stable film. The thin film was subsequently embossed and perforated (0.1-1 micron pore) prior to being spray coated or roll coated with the previously described oligomer electrolyte.

### EXAMPLE 30

The two stage molecularly miscible copolymer system may also be prepared by emulsion polymerization of the above mentioned monomers. The initial stage copolymers comprising from 5 to 95 weight percent of M#1 and the remainder EA were prepared by an emulsion polymerization technique as follows: A monomer mixture was prepared, having EA: M#1 ratio of 90:10. The mixture contained 54.9% of EA, 6.1% of M#1, 1.5% of n-dodecyl mercaptan, 36.7% of DI water and 0.8% of a 10% aqueous sodium dodecylbenzene sulphonate solution. The monomer mixture was polymerized according to the following procedure. To an appropriate glass vessel equipped with stirrer, heater, a reflux condenser, and nitrogen sparge tube, was added 97.2% of DI water and 0.03% of sodium carbonate. The mixture was sparged for one hour with nitrogen while heating to 70°C. The sparge rate was then changed to a sweep and 2.7% of a 10% aqueous sodium dodecylbenzene sulphonate solution was added to the mixture. The temperature of the reaction vessel was then raised to 85°C. At this temperature 18.03 ml of the initiator mixture which consisted of 0.34% of sodium persulfate and 99.7% of deionized water was added to the reaction vessel. The monomer mixture was then fed into the reaction vessel at the rate of 7.56 ml/min. As the polymerization proceeded, the initiator mixture was added to the reaction vessel at the rate of 1.3 ml/min. The accumulation of solids was measured every 30 minutes. At the completion of the initiator and monomer addition, the mixture was held at 85 °C for one hour. The mixture was then cooled and stored in a polyethylene jar in preparation for the second and final stage of the polymerization.

The final stage copolymers comprising from 5 to 95 weight percent of MMA and the remainder EA monomers and 5 to 95 % of the first stage copolymer, P(EA- M#1 =90/10), were prepared by an in-situ emulsion polymerization technique as follows: A monomer mixture was prepared, having MMA: EA ratio of 60:40. The mixture contained 37.2% of MMA, 24.8% of EA, 0.3% of n-dodecyl mercaptan, 36.5% of DI water and 1.2% of a 10% aqueous sodium dodecylbenzene sulphonate solution. The monomer mixture was polymerized according to the following procedure. To an appropriate glass vessel equipped with stirrer, heater, a reflux condenser, and nitrogen sparge tube, was added: 67.9% of the initial stage emulsion and 32.1% of DI water. The mixture was sparged for one hour with nitrogen while heating to 70°C. The sparge rate was then changed to a sweep. The temperature of the reaction vessel was then raised to 85°C. At this temperature 17.63 ml of the initiator mixture which consisted of 0.22% of sodium persulfate and 99.78% of deionized water was added to the reaction vessel. The monomer mixture was then fed into the reaction vessel at the rate of 4.30 ml/min. As the polymerization proceeded, the initiator mixture was added to the reaction vessel at the rate of 1.17 ml/min. The accumulation of solids was measured every 30 minutes. At the completion of the initiator and monomer addition, the mixture was held at 85°C for one hour. The mixture was then cooled, filtered and polymer isolated by freeze-drying.

### EXAMPLE 31

The following demonstrates the electrochemical stability of the oligomer electrolyte made by the method of Example A from M#2/M#3 =90/10. The molecular weight from gel permeation chromatography (against a poly(methyl methacrylate) standard) was: Mw =411; M_{w}/Mₙ =1.222. The oligomer was complexed with lithium salt, (Li(CF₃SO₂)₂) 0.7m/kg. The data was obtained by cyclic voltammetry at a scan rate of 100 mV/s on an aluminum working electrode and lithium counter and reference electrodes. The aluminum electrode showed no response between 2.0 and 5.0 volts and negligible response, reaching only 5.5 micro amps./cm² at 6 volts versus lithium. This is an unusually high potential limit, in light of the fact that 4.3 V limit is considered an overcharge or "abuse" potential for present commercial and prototype Li/LiNiCₒO₂ or Li/LiCₒO₂ cells. "At or above 4.3 volts there are concerns about the stability of electrolytes and binders, as well as irreversible phase changes in the metal oxides" (J. Electrochem. Soc., Vol. 143, No. 4, April 1996). The PEO or PPO polymers known to the literature will have an electrochemical stability window from 0 to about 3.7 volts versus lithium; see "Electrochemistry of Novel Materials", Frontiers of Electrochemistry Edited by Jacek Lipkowski and Philip N. Ross; page 94, 1994 VCH Publishers, Inc Higher electrolyte stability should make the present oligomer attractive in combination with the high voltage (4.5 V) lithiated manganese oxide (LiMn₂O₄) cathode material.

## Claims

1. An oligomer of the formula
R₁-X-[(A)q-(Bᵣ)]-Z,
wherein
(a) R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
(b) -X- is -O-, -S-, -S(O)-, -S(O)₂-, -, -NH-, -NR₃-, -NH-C(O)-NH-, -NR₃-C(O)-NR₃-, -NH-C(O)- O-, -NR₃-C(O)- O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O) R₃)₂, -PH-, -PR₃-, -P(OH)-O-, -P(O R₃)-O-, -P(O) (OH)-O-, -P(O)(OR₃)-O-, -O-P(OH)-O-, -O-P(O R₃)-O-, -O-P(O) (OH)-O-, or -O-P(O) (O R₃)-O-;
(c) (A)_{q} comprises polymerized units of a monomer with functionality which is capable of complexing with conductive metal salts;
(d) (B)ᵣ comprises polymerized units of a monomer, whose polymerized units are not capable of complexing with conductive metal salts;
(e) Z is H or R₁-X-;
(f) -[(A)_{q}-(B)ᵣ]- , when r is not 0, define either a block copolymer or a random copolymer;
(g) (q + r) = 1 to 25, q is 1 to 25, and r is 0 to 24.

2. A conductive metal salt/oligomer blend of:
(a) from 80 to 95 weight percent of an oligomer of the formula
R₁-X-[(A)q-(Bᵣ)]-Z,
wherein
(1) R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(2) -X- is -O-, -S-, -S(O)-, -S(O)₂-, -, -NH-, -NR₃-, -NH-C(O)-NH-, -NR₃-C(O)-NR₃-, -NH-C(O)-O-, -NR₃-C(O)-O-, (>)R₃CC(O)OR₃, (>)HC-C(O)OR₃, (>)C-(C(O)OR₃)₂, (>)R₃C-C(O)R₃, (>)HC-C(O) R₃, (>)C-(C(O) R₃)₂, -PH-, -PR₃-, -P(OH)-O-, -P(O R₃)-O-, -P(O)(OH)-O-, -P(O) (OR₃)-O-, -O-P(OH)-O-, -O-P(O R₃)-O-, -O-P(O) (OH)-O-, or -O-P(O) (O R₃)-O-;
(3) (A)_{q} comprises polymerized units of a monomer with functionality which is capable of complexing with conductive metal salts;
(4) (B)ᵣ comprises polymerized units of a monomer, whose polymerized units are not capable of complexing with conductive metal salts;
(5) -[(A)_{q}-(B)ᵣ]-, when r is not 0, define either a block copolymer or a random copolymer;
(6) Z is H or R₁-X-
(7) (q + r) = 1 to 25, q is 1 to 25, and r is 0 to 24 and
(b) from 5 to 20 weight percent of one or more conductive metal salts.

3. An oligomer of degree of polymerization of the constituent (meth)acrylate monomers from 1 to 25 comprising:
(a) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(b) from 0 to 95 weight percent of polymerized units of at least one acrylate ester monomer of the formula
CH₂=CH-COO-CH₂-CHR -R₂,
where R is H or CH₃, and where R₂ is H, C₁- C₂₀ alkyl, or C₆- C₂₀ aryl, alkaryl, or aralkyl;
(c) from 0 to 95 weight percent of polymerized units of at least one (meth)acrylate ester monomer of the formula
CH₂=CR-COO-(CH₂-CHR-O)ₙ- R₂,
where n is 1 to 12.

4. A conductive metal salt/oligomer blend of:
(a) from 80 to 95 weight percent of an oligomer of degree of polymerization of the constituent (meth)acrylate monomers from 1 to 25 comprising:
(1) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(2) from 0 to 95 weight percent of polymerized units of at least one acrylate ester monomer of the formula
CH₂=CH-COO-CH₂-CHR -R₂,
where R is H or CH₃, and where R₂ is H, C₁- C₂₀ alkyl, or C₆-C₂₀ aryl, alkaryl, or aralkyl;
(3) from 0 to 95 weight percent of polymerized units of at least one (meth)acrylate ester monomer of the formula
CH₂=CR-COO-(CH₂-CHR-O)ₙ- R₂,
where n is 2 to 12; and
(b) from 5 to 20 weight percent of one or more conductive metal salts.

5. The blend of Claim 2 or Claim 4 wherein the conductive metal salt is a lithium salt selected from the group consisting of LiClO₄, LiPF₆, LiBF₄, Li(CF₃SO₃), and LiN(CF₃SO₂)₂.

6. The blend of Claim 5 wherein the conductive lithium salt is LiN(CF₃SO₂)₂.

7. An article comprising the blend of Claim 2 or Claim 4 and a membrane which allows sorption and permeation of the conductive salt/ oligomer blend.

8. The article of Claim 7 wherein the membrane has a non-woven structure.

9. A composite of
(a)
(1) from 5 to 60 weight percent of the oligomer of Claim 1;
(2) from 5 to 20 weight percent of one or more conductive metal salts; and
(b) from 20 to 90 weight percent of a matrix composition comprising
(1) from 10 to 100 weight percent of a first homopolymer or copolymer having a glass temperature, T_{g}, of below -35 °C and a weight-average molecular weight of at least 20,000, of from 0 to 90 weight percent of polymerized units of an alkyl or alkylthioalkyl ester of acrylic or methacrylic acid, and of from 10 to 100 weight percent of polymerized units of a poly(alkyleneoxy) (meth)-acrylate comonomer of the formula
CH₂=CR-COO-(CH₂-CHR-O)ₚ- R₂,
where p is 1 -1000;
(2) from 10 to 90 weight percent of a second copolymer of weight-average molecular weight at least 30,000, of polymerized units of at least one alkyl ester of acrylic or methacrylic acid, wherein the first homopolymer or copolymer and the second copolymer of the matrix composition are miscible, and wherein the conductive metal salt/oligomer blend is miscible with the matrix composition; and
(3) from 0 to 5 parts weight percent of a conductive lithium salt dissolved in the first homopolymer or copolymer of the matrix composition.

10. A composite of
(a) from 5 to 80 weight percent, of a conductive salt/ oligomer blend of:
(1) from 80 to 95 weight percent of an oligomer of degree of polymerization of the constituent (meth)acrylate monomers from 1 to 25 comprising:
(i) from 5 to 20 weight percent of end-group units of at least one mercaptan residue R₁-S-, where R₁- is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(ii) from 0 to 95 weight percent of polymerized units of at least one acrylate ester monomer of the formula
CH₂=CH-COO-CH₂-CHR-R₂,
where R is H or CH₃, and where R₂ is H, C₁- C₂₀ alkyl, or C₆ - C₂₀ aryl, alkaryl, or aralkyl;
(iii) from 0 to 95 weight percent, of polymerized units of at least one (meth)acrylate ester monomer of the formula
CH₂=CR-COO-(CH₂-CHR-O)ₙ-R₂,
where n is 2 to 12; and
(2) from 5 to 20 weight percent of a conductive metal salt; and
(b) from 20 to 95 weight percent of a matrix composition, the matrix composition comprising
(1) from 10 to 100 weight percent of a first homopolymer or copolymer having a glass temperature, T_{g}, of below -35 °C., and a weight-average molecular weight of at least 20,000, of polymerized units of from 0 to 90 weight percent of an alkyl or alkylthioalkyl ester of acrylic or methacrylic acid, and 10 to 100 weight percent of polymerized units of a poly(alkyleneoxy)(meth)acrylate comonomer of the formula
CH₂=CR-COO-(CH₂-CHR-O)ₚ- R₂,
where p is 1-1000;
(2) from 10 to 90 weight percent of a second copolymer of weight-average molecular weight at least 30,000, of polymerized units of at least one alkyl ester of acrylic or methacrylic acid, wherein the first homopolymer or copolymer and the second copolymer of the matrix composition are miscible, and wherein the conductive metal salt/ oligomer blend is miscible with the matrix composition; and
(3) from 0 to 5 weight percent of a conductive lithium salt dissolved in the first homopolymer or copolymer of the matrix composition.

11. The composite of Claims 9 or 10, wherein at least one of the first homopolymer or copolymer or second copolymer of the matrix composition are cross-linked.

12. The composite of Claims 9 or 10, wherein the composite is an admixed blend of the conductive metal salt/oligomer blend and the matrix composition.

13. An article formed from the composite of Claims 9 or 10, wherein the conductive metal salt/oligomer blend is encapsulated within the matrix composition.

14. An article formed from the composite of Claims 9 or 10, wherein the conductive metal salt/oligomer blend is layered to a film or sheet formed from the matrix composition.

15. A process for the preparation of a conductive metal salt/oligomer blend of:
(a) from 80 to 95 weight percent of an oligomer of degree of polymerization of the constituent (meth)acrylate monomers from 1 to 25 comprising:
(1) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
(2) from 0 to 95 weight percent of polymerized units of at least one acrylate ester monomer of the formula
CH₂=CH-COO-CH₂-CHR-R₂,
where R is H or CH₃, and where R₂ is H, C₁-C₂₀ alkyl, or C₆- C₂₀ aryl, alkaryl, or aralkyl;
(3) from 0 to 95 weight percent of polymerized units of at least one (meth)acrylate ester monomer of the formula
CH₂=CR-COO-(CH₂-CHR-O)ₙ-R₂,
where n is 2 to 12; and
(b) from 5 to 20 weight percent of a conductive metal salt, the process comprising:
(1) drying the conductive metal salt to remove water;
(2) passing the at least one (meth)acrylate ester monomer of the formula CH₂=CR-COO-(CH₂-CHR-O)ₙ-R₂, where n is 2 to 12, through at least one column of activated alumina or molecular sieves;
(3) admixing the conductive metal salt, the at least one acrylate ester monomer and the at least one (meth)acrylate ester monomer with an alkyl mercaptan R₁-SH, where R₁ is C₁-C₁₂ alkyl, C₁-C₁₂ alkoxyalkyl, C₆-C₇ aryl or alkaryl, C₆-C₇ aryl or alkaryl, or -(CH₂)ₘ-COOR₃, where m is 1 or 2, and R₃ is C₁-C₁₂ alkyl;
(4) subjecting the admixture to a free-radical polymerization process; and
(5) removing any volatile residues by vacuum devolatilization.

16. The process of Claim 15 wherein the polymerization process is continuous.

17. An electrolytic cell comprising an anode, a cathode and a conductive electrolyte comprising a conductive salt/oligomer blend of:
(a) from 80 to 95 weight percent of an oligomer of the formula R₁-X-[(A)_{q}-(Bᵣ)]-Z, wherein
(1) R₁ is C₁-C₁₂ alkyl, C₁-C₁₂ alkoxyalkyl, C₆-C₇ aryl or alkaryl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
(2) -X- is -O-, -S-, -S(O)-, -S(O)₂-, -, -NH-, -NR₃-, -NH-C(O)-NH-, -NR₃-C(O)-NR₃-, -NH-C(O)-O-, -NR₃-C(O)-O-, (>)R₃CC(O)OR₃, (>)HC-C(O)OR₃, (>)C-(C(O)OR₃)₂, (>)R₃C-C(O)R₃, (>)HC-C(O)R₃, (>)C-(C(O)R₃)₂, -PH-, -PR₃-, -P(OH)-O-, -P(OR₃)-O-, -P(O) (OH)-O-, -P(O)(OR₃)-O-, -O-P(OH)-O-, -O-P(OR₃)-O-, -O-P(O) (OH)-O-, or -O-P(O) (O R₃)-O-;
(3) (A)_{q} comprises polymerized units of a monomer with functionality which is capable of complexing with conductive metal salts;
(4) (B)ᵣ comprises polymerized units of a monomer, which polymerized units are not capable of complexing with conductive metal salts;
(5) Z is H or R₁-X-;
(6) -[(A)_{q}-(B)ᵣ]-, when r is not 0, define either a block copolymer or a random copolymer;
(7) (q + r) = 1 to 25, q is 1 to 25, and r is 0 to 24. and
(b) from 5 to 20 weight percent of one or more conductive metal salts.

18. An electrolytic cell comprising an anode, a cathode and a conductive electrolyte comprising an oligomer of degree of polymerization of the constituent (meth)acrylate monomers from 1 to 25 comprising:
(a) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁-C₁₂ alkyl;
(b) from 0 to 50 percent by weight of polymerized units of at least one acrylate ester monomer of the formula CH₂-CH-COO-CH₂-CHR-R₂, where R is H or CH₃, and where R₂ is H, C₁-C₂₀ alkyl, or C₆-C₂₀ aryl, alkaryl, or aralkyl;
(c) from 0 to 95 weight percent of polymerized units of at least one (meth)acrylate ester monomer of the formula CH₂=CR-COO-(CH₂-CHR-O)ₙ-R₂, where n is 2 to 12.

19. An electrolytic cell comprising an anode, a cathode and a conductive electrolyte comprising a conductive salt/ oligomer blend of:
(a) from 80 to 95 weight percent of an oligomer of degree of polymerization of the constituent (meth)acrylate monomers from 1 to 25 comprising:
(1) from 5 to 50 weight percent of end-group units of at least one mercaptan residue R₁-S-, where R₁ is C₁-C₁₂ alkyl, C₁-C₁₂ alkoxyalkyl, C₆-C₇ aryl or alkaryl, or -(CH₂)ₘ-COOR₃, where m is 1 or 2, and R₃ is C₁- C₁₂ alkyl;
(2) from 0 to 95 weight percent of polymerized units of at least one acrylate ester monomer of the formula
CH₂=CH-COO-CH₂-CHR -R₂,
where R is H or CH₃, and where R₂ is H, C₁- C₂₀ alkyl, or C₆ - C₂₀ aryl, alkaryl, or aralkyl;
(3) from 0 to 95 weight percent of polymerized units of at least one (meth)acrylate ester monomer of the formula
CH₂=CR-COO-(CH₂-CHR-O)ₙ-R₂,
where n is 2 to 12; and
(b) from 5 to 20 weight percent of one or more conductive metal salts.

20. An electrolytic cell comprising an anode, a cathode and a conductive electrolyte comprising a composite of (a) from 5 to 15 weight percent of
(a) a conductive salt/ oligomer blend of:
(1) from 80 to 95 weight percent of an oligomer of degree of polymerization of the constituent (meth)acrylate monomers from 1 to 25 comprising:
(i) from 5 to 50 weight percent of end-group units of at least one mercaptan residue R₁-S-, where R₁ is C₁-C₁₂ alkyl, C₁-C₁₂ alkoxyalkyl , C₆-C₇ aryl or alkaryl, or -(CH₂)ₘ-COOR₃, where m is 1 or 2, and R₃ is C₁-C₁₂ alkyl;
(ii) from 0 to 95 weight percent of polymerized units of at least one acrylate ester monomer of the formula
CH₂=CH-COO-CH₂-CHR -R₂,
where R is H or CH₃, and where R₂ is H, C₁- C₂₀ alkyl, or C₆-C₂₀ aryl, alkaryl, or aralkyl;
(iii) from 0 to 95 weight percent of polymerized units of at least one (meth)acrylate ester monomer of the formula
CH₂=CR-COO-(CH₂-CHR-O)ₙ-R₂,
where n is 2 to 12; and
(2) from 5 to 20 weight percent of one or more conductive metal salts; and
(b) from 20 to 95 weight percent of a matrix composition, the matrix composition comprising
(1) from 10 to 100 weight percent of a first homopolymer or copolymer having a glass temperature, T_{g}, of below -35°C., and a weight-average molecular weight of at least 20,000, of polymerized units of from 0 to 90 weight percent of an alkyl or alkylthioalkyl ester of acrylic or methacrylic acid, and 10 to 100 weight percent of polymerized units of a poly(alkyleneoxy)(meth)acrylate comonomer of the formula
CH₂=CR-COO-(CH₂-CHR-O)ₚ-R₂,
where p is 1-1000;
(2) from 5 to 80 weight percent of a second copolymer of weight-average molecular weight at least 30,000, of polymerized units of at least one alkyl ester of acrylic or methacrylic acid, wherein the first homopolymer or copolymer and the second copolymer of the matrix composition are miscible, and wherein the conductive salt/ oligomer blend is miscible with the matrix composition; and
(3) from 0 to 5 weight percent of a conductive lithium salt dissolved in the first homopolymer or copolymer of the matrix composition.

21. A process for preparing the battery of Claim 20, comprising
(a) polymerization of the monomers which form the first homopolymer or copolymer in a constant flow stirred reactor to at least 65 % conversion;
(b) transfer of the first homopolymer or copolymer to a stirred reactor;
(c) admixture with the monomers which form the second copolymer;
(d) polymerization of the monomers which form the second copolymer to at least 65 % conversion;
(e) transfer of the admixture of first homopolymer or copolymer and second copolymer to an extruder;
(f) extrusion of the admixture in the form of a sheet or film;
(g) application of the conductive salt/ oligomer to at least one surface of the extruded sheet or film;
(h) after extrusion but prior to, simultaneous with, or following the application of the conductive salt/ oligomer, perforating the film to allow the conductive salt/ oligomer controlled access to both sides of the sheet or film;
(i) conducting the oligomer-coated film between the anode and cathode of an electrolytic cell article.

22. The process of Claim 21, further characterized in that
(a) at step (c) of Claim 21, a photosensitized initiator and a polyfunctional polymerizable monomer are added to the mixture of monomers;
(b) after step (f) of Claim 21, the extrudate is illuminated with light sufficient to cause crosslinking by polymerization of the polyfunctional polymerizable monomer.
